# EUROPÄISCHE PATENTSCHRIFT

(11) **EP 1 444 453 B1**
(45) Veröffentlichungstag und Bekanntmachung des Hinweises auf die Patenterteilung: **18.10.2006**
(21) Anmeldenummer: 02782971.2
(22) Anmeldetag: 22.10.2002
(51) Int. Cl.: F16H 7/12

(54) **SPANNVORRICHTUNG**
CLAMPING DEVICE
DISPOSITIF DE TENSION

(30) Priorität: 14.11.2001 DE 10155826
(43) Veröffentlichungstag der Anmeldung: 11.08.2004
(73) Patentinhaber: Schaeffler KG, 91074 Herzogenaurach (DE)
(72) Erfinder: SCHMIDT, Werner, 91074 Herzogenaurach (DE); SCHMIDL, Matthias, 90542 Eckental (DE); SINGER, Johann, 91091 Grossenseebach (DE)
(86) Internationale Anmeldenummer: PCT/EP2002/011775
(87) Internationale Veröffentlichungsnummer: WO 2003/042578

(56) Entgegenhaltungen:
- WO-A-00/61970
- US-A- 5 334 110
- US-A- 5 919 107

## Beschreibung

### Gebiet der Erfindung

Die vorliegende Erfindung bezieht sich auf eine Spannvorrichtung, die zum Spannen eines Zugmittels in einem Zugmitteltrieb bestimmt ist. Die Spannvorrichtung ist insbesondere für einen Aggregatetrieb einer Brennkraftmaschine vorgesehen, bei dem ein Zugmittel, angetrieben durch eine Riemenscheibe der Kurbelwelle, weitere Riemenscheiben der anzutreibenden Aggregate wie beispielsweise Wasserpumpe, Klimakompressor, Lenkhilfspumpe u. a. verbindet. Der Aufbau der Spannvorrichtung umfasst ein Maschinenteil, das mittels einer Grundplatte an dem Gehäuse, vorzugsweise dem Kurbelgehäuse einer Brennkraftmaschine abgestützt ist. Die Befestigung erfolgt mittels einer zentral im Maschinenteil angeordneten Schraube, mit der die Spannvorrichtung ortsfest an einem Gehäuse, insbesondere dem Kurbelgehäuse einer Brennkraftmaschine, angeschraubt ist. Weiterhin umfasst die Spannvorrichtung einen gegenüber dem Maschinenteil drehbaren Schwenkarm, an dessen freiem Ende eine an dem Zugmittel abgestützte, drehbare Spannrolle angeordnet ist. Zwischen dem Schwenkarm und dem Maschinenteil ist ein als Gleitlager ausgebildetes Schwenklager angeordnet, wozu der Schwenkarm beispielsweise mittels einer Nabe einen Hülsenabschnitt oder Zapfen des Maschinenteils koaxial umschließt. Neben der Lagerung des Schwenkarms hat das Schwenklager gleichzeitig die Aufgabe, durch eine gezielte Reibcharakteristik die Zugmittelschwingungen zu dämpfen. Die Spannvorrichtung ist weiterhin mit einer Torsionsfeder versehen, deren Umfangskraft eine kraftschlüssige Abstützung der Spannrolle an dem Zugmittel sicherstellt. Eine weitere in Axialrichtung wirkende Kraft der Torsionsfeder verspreizt das Maschinenteil gegenüber dem Schwenkarm. Die Spannvorrichtung ist außerdem mit einem Endanschlag versehen, der eine Stellwegbegrenzung des Schwenkarms gegenüber dem Maschinenteil sicherstellt. Die Wirksamkeit der eingesetzten Torsionsfeder erfordert, dass deren Federenden sowohl am Maschinenteil als auch am Schwenkarm lagefixiert sind. Weiterhin ist die Spannvorrichtung mit einer Einrichtung versehen, die den Schwenkarm gegenüber dem Maschinenteil in einer sogenannten Montageposition fixiert. Diese Einrichtung ermöglicht nach Einbau des Zugmittels und Freigabe des vorgespannten Schwenkarms eine Verlagerung des Schwenkarms in die Arbeitsposition, zur Sicherstellung einer ausreichenden Vorspannung des Zugmittels.

### Hintergrund der Erfindung

Aus der DE 43 43 429 C2 ist eine gattungsgemäße Spannvorrichtung bekannt, bei der die Torsionsfeder in einem kreisringförmig gestalteten, topfartig ausgebildeten Maschinenteil eingesetzt ist. Das Federende der Torsionsfeder stützt sich an einem axial vorspringenden Ansatz an dem Boden des Maschinenteils ab. Zur Realisierung eines Endanschlages bildet der Schwenkarm einen axial ausgerichteten Vorsprung, der in eine örtlich begrenzte Aussparung der Au-βenwandung des Maschinenteils eingreift. Diese bekannte, einen großen Bauraum benötigende Spannvorrichtung umfasst eine Vielzahl von Massivbauteilen, wodurch sich das Gewicht der Vorrichtung, die Herstellkosten und der Montageaufwand nachteilig erhöht.

Das Dokument WO 00/61970 A zeigt eine Spannvorrichtung, deren Spannrolle einen exzentrisch drehbar gelagerten Spannarm außenseitig umschließt. Die zwischen dem Spannarm und der Grundplatte eingesetzte Torsionsfeder bewirkt eine Verdrehung des Spannarms und der damit unmittelbar in Verbindung stehenden Spannrolle zwecks Erzielung einer ausreichen Vorspannung des Zugmittels, an dem die Spannrolle abgestützt ist. Das von dem Spannarm abgewandte Federende der Torsionsfeder greift in eine lokale Aussparung der Grundplatte. Zur Bildung eines Endanschlages greift ein axial vorstehender Ansatz des Schwenkarms in eine weitere begrenzte Aussparung der Grundplatte. Die Spannvorrichtung schließt weiterhin einen Fixierstift ein mit dem der Spannarm beispielsweise in einer Endstellung gegenüber der Grundplatte positioniert werden kann.

Eine als Exzenterspanner ausgelegte Spannvorrichtung ist dem Patent US 4,832,665 zu entnehmen. Eine Montageposition des Exzenterspanners wird erzielt, indem der Exzenter gegenüber der Grundplatte entgegen einer Kraftrichtung der zwischen der Grundplatte und dem Exzenter eingesetzten Torsionsfeder verdreht wird und diese Position mit Hilfe eines separaten Stiftes gesichert wird. Die Stiftsicherung erfordert ein aufwändiges Handling, da der Stift nur bei einer Lageübereinstimmung zwischen der Bohrung im Exzenter und der Ausnehmung in der Grundplatte eingeführt werden kann, zur Erzielung einer Lagefixierung bzw. Verriegelung dieser Bauteile.

### Zusammenfassung der Erfindung

Von den Nachteilen bekannter Lösungen ausgehend, ist es Aufgabe der vorliegenden Erfindung, eine bauraum-, kosten- und gewichtsoptimierte Spannvorrichtung zu realisieren mit einem wirksamen Endanschlag und Sicherung des Schwenkarms in einer Montageposition sowie einem einfachen Handling.

Diese Problemstellung wird erfindungsgemäß durch die Kombination der in Anspruch 1 aufgeführten Merkmale gelöst. Die erfindungsgemäße Spannvorrichtung umfasst eine als Mehrfunktionsteil ausgebildete Positioniereinrichtung. An dieser Einrichtung ist ein Federende der Torsionsfeder lagefixiert. Weiterhin bildet die Positioniereinrichtung einen Endanschlag für den Schwenkarm und ermöglicht den Schwenkarm mittels eines separaten Werkzeugs in einer Montageposition zu halten. Die erfindungsgemäße Maßnahme stellt dabei geringe Anforderungen hinsichtlich des Bauraums und ermöglicht eine Gewichtsreduzierung der gesamten Spannvorrichtung, was insgesamt zu einer Kostenreduzierung führt. Die außenseitig mit der Grundplatte bzw. dem Maschinenteil verbundene Positioniereinrichtung verbessert das Handling und ermöglicht eine automatisierte, kostenoptimierte Montage der gesamten Spannvorrichtung.

Weitere vorteilhafte Ausgestaltungen der Erfindung sind Gegenstand der abhängigen Ansprüche 2 bis 12.

Eine vorteilhafte Ausgestaltung der Erfindung sieht vor, dass die Positioniereinrichtung zwei versetzt zueinander angeordnete, parallel zu einer Symmetrieachse der Spannvorrichtung verlaufende Säulen unterschiedlicher Länge aufweist. Die längere Säule bildet dabei den Endanschlag für den Schwenkarm. Die kürzere, winkelversetzt in Richtung einer Arbeitsstellung des Schwenkarms angeordnete kürzere Säule dient zur Aufnahme eines separaten Werkzeugs, insbesondere eines als Stift gestalteten Verriegelungsmittels, an dem der Schwenkarm in einer Montageposition lagefixiert werden kann. Alternativ dazu kann die kürzere Säule auch als Anschlag genutzt werden für ein an dem Schwenkarm geführtes separates Werkzeug bzw. Verriegelungsmittel, das den Schwenkarm der Spannvorrichtung in der Montageposition hält und damit den Einbau des Zugmittels vereinfacht.

Der Schwenkarm ist im Bereich der Nabe am Außenumfang mit einem radial nach außen gerichteten Zapfen oder Vorsprung versehen, der mit der längeren Säule der Positioniereinrichtung unmittelbar zusammenwirkt zur Schaffung eines Endanschlages für den Schwenkarm. In der Montageposition wirkt der Zapfen des Schwenkarms mittelbar über ein separates Verriegelungsmittel mit der kürzeren Säule der Positioniereinrichtung zusammen.

Als separates Werkzeug bietet es sich an, einen Rundstift vorzusehen, der in eine Bohrung der kürzeren Säule der Positioniereinrichtung eingesetzt ist und gemeinsam mit dem Zapfen des Schwenkarms diesen in der Montageposition hält. Alternativ schließt die Erfindung einen in dem Schwenkarm geführten Stift ein, der in eine Bohrung der kürzeren Säule der Positioniereinrichtung verrastet oder an dieser einen Anschlag findet. Zum besseren Handling ist der Stift endseitig abgewinkelt oder mit einer Öse versehen.

Als Maßnahme zur Verbesserung der Festigkeit der versetzt angeordneten Säulen der Positioniereinrichtung, sind diese an dem von der Grundplatte abgewandten Ende durch einen Steg bzw. eine Traverse verbunden. Die Erfindung schließt weiterhin ein, die Positioniereinrichtung mit dem Maschinenteil bzw. der Grundplatte einstückig zu verbinden. Dazu eignet sich insbesondere dieses Bauteil als ein Gussteil zu gestalten, wodurch sich für große Stückzahlen ein Kostenvorteil einstellt. Die Erfindung schließt außerdem alternative Herstellverfahren ein, beispielsweise ein Fließpressverfahren bzw. eine Kaltumformung.

Die kompakte Bauart der erfindungsgemäßen Spannvorrichtung unterstreichend, erstreckt sich die Positioniereinheit über einen Umfangsbereich des Maschinenteils bzw. der Grundplatte von ≦ 60°. Dabei benötigt die Positioniereinrichtung in radialer Richtung ein Maß von ≦ 10mm. Folglich ergibt sich dadurch eine im Vergleich zu bisherigen Spannvorrichtungen kleindimensionierte Abstützfläche der gesamten Spannvorrichtung. Diese vergrößert sich auch nicht durch die Befestigung der Spannvorrichtung, da diese mittels einer zentral im Maschinenteil angeordneten Schraube erfolgt.

Nach einer erfolgten Montage des Maschinenteils mit dem Schwenkarm stellt sich im Bereich der Schwenkarmnabe eine Topfhöhe von ≦ 80mm ein sowie ein Topfdurchmesser von ≦ 65mm. Diese Maßangaben unterstreichen die kompakte, relativ wenig Bauraum benötigende erfindungsgemäße Spannvorrichtung. Damit erfüllt die Spannvorrichtung die Forderung von Fahrzeugherstellern, die insbesondere für kompakte Kleinfahrzeuge gleichfalls eine Miniaturisierung von Teilsystemen bzw. Komponenten der Brennkraftmaschine fordern, zu denen auch die Spannvorrichtung zählt.

Als Montagehilfe bzw. Einstellhilfe schließt die Erfindung weiterhin ein, den Schwenkarm im Bereich der Nabe mit einem Mehrkantprofil zur Aufnahme eines Werkzeugs zu versehen, mit dem der Schwenkarm gegenüber der Grundplatte bzw. dem Maschinenteil positioniert werden kann. Als Maßnahme die Betätigungskraft bzw. die Einstellkraft aufgrund eines verlängerten Hebelarms zu verringern, bietet es sich an, das Mehrkantprofil am Außenumfang der Nabe anzuordnen.

### Kurze Beschreibung der Zeichnungen

Der Erfindungsgedanke wird in der nachfolgenden Beschreibung von Ausführungsbeispielen näher erläutert. Es zeigen:
- Figur 1: in einer Perspektive die erfindungsgemäße Spannvorrichtung;
- Figur 2: die Vorderansicht der Spannvorrichtung;
- Figur 3: eine Alternative zu der in Figur 1 abgebildeten Spannvorrichtung.

### Detaillierte Beschreibung der Zeichnungen

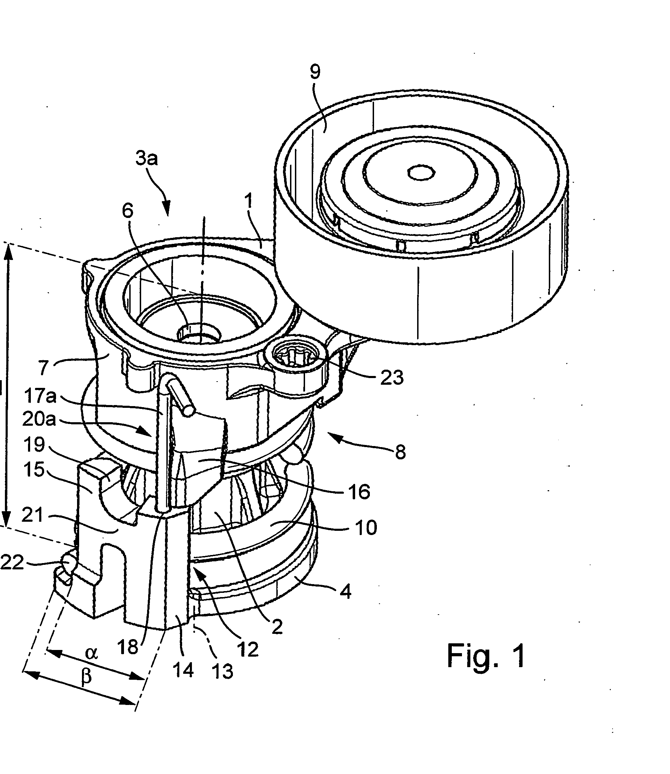

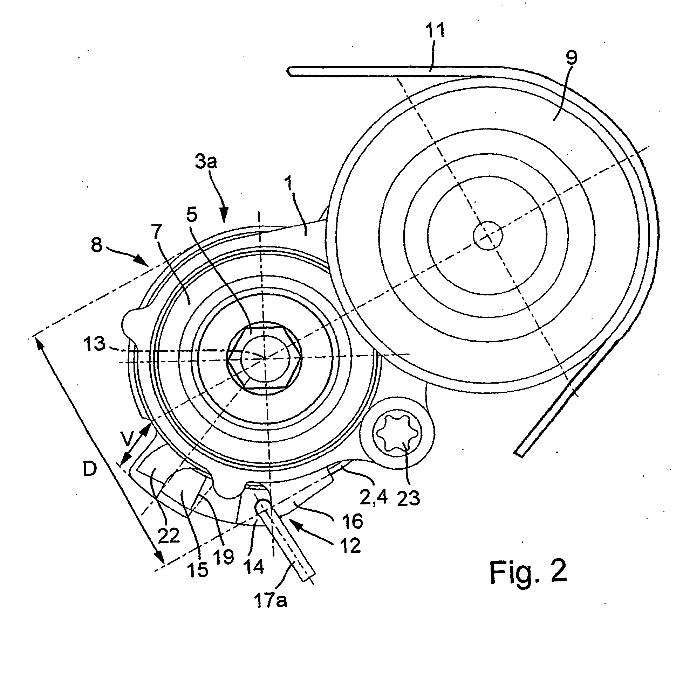

In der Figur 1 ist mit der Bezugsziffer 1 ein Schwenkarm bezeichnet, der gemeinsam mit einem Maschinenteil 2 die Spannvorrichtung 3a bildet. Das Maschinenteil 2 ist einstückig mit einer Grundplatte 4 verbunden, die bei eingebauter Spannvorrichtung 3a ortsfest an einem Gehäuse, insbesondere einem Kurbelgehäuse einer Brennkraftmaschine befestigt ist. Die Befestigung der Spannvorrichtung 3a erfolgt mittels einer zentral im Maschinenteil 2 angeordneten Verschraubung 5, die in Figur 2 abgebildet ist. Dazu ist das Maschinenteil 2 mit einer zentrischen Bohrung 6 versehen. Der Schwenkarm 1 ist über eine Nabe 7 auf einem zylindrischen Abschnitt des Maschinenteils 2 drehbar angeordnet, wobei diese Bauteile ein Schwenklager 8 bilden. In das Schwenklager 8 ist dazu eine Gleitlagerbuchse eingesetzt. Der Schwenkarm 1 ist an dem von der Nabe 7 abgewandten Ende mit einer drehbaren Spannrolle 9 versehen, die mittels einer Torsionsfeder 10 kraftschlüssig an einem Zugmittel 11 anliegt. Zur Erzielung einer Fixierung oder Stellwegbegrenzung des Schwenkarms 1 ist eine Positioniereinrichtung 12 vorgesehen. Diese umfasst zwei durch den Winkel "α" versetzt angeordnete, parallel zu einer Symmetrieachse 13 der Spannvorrichtung 3a ausgerichtete, an der Grundplatte 4 befestigte Säulen 14, 15.

Die Säulen 14, 15 stehen mittelbar oder unmittelbar mit einem radial nach außen gerichteten, an der Nabe 7 des Schwenkarms 1 befestigten Zapfen 16 in Wirkverbindung. Die Länge der Säule 15 ist so gewählt, dass diese eine axiale Überdeckung mit dem Zapfen 16 sicherstellt und damit einen Endanschlag für den Schwenkarm 1 bildet. Die weitere verkürzte Säule 14 dient zur Aufnahme eines separaten Verriegelungsmittels oder Werkzeugs, ausgebildet als Stift 17a, der in eine Bohrung 18 der Säule 14 eingesetzt, ein Verdrehung des Schwenkarms 1 in Richtung des Endanschlages 19, der Säule 15 verhindert und damit den Schwenkarm 1 in einer Montageposition 20a lagefixiert. Als Maßnahme, die Festigkeit der Säulen 14, 15 zu verbessern, sind diese mittels eines Stegs 21 verbunden. Die als Mehrfunktionsteil ausgebildete Positioniereinrichtung 12 fixiert die Grundplatte 4 und damit die Spannvorrichtung 3a gegenüber der Brennkraftmaschine. Außerdem ist an der Positioniereinrichtung 12 ein Federende 22 der Torsionsfeder 10 drehfixiert.

Die Figur 2 zeigt die Spannvorrichtung 3a in einer Vorderansicht und verdeutlicht die kompakte Bauart insbesondere deren Positioniereinrichtung 12. Diese erstreckt sich über einen geringen Bereich des Außenumfangs der Grundplatte 4, gekennzeichnet durch den Winkel "β", der < 60° beträgt. Die Säulen 14, 15 sind dabei in einem Winkel "α" zueinander angeordnet, der kleiner ist im Vergleich zu dem Winkel "β". Auch in radialer Richtung benötigt die Positioniereinrichtung 12 einen geringen Bauraum, der durch das Radialmaß "V" gekennzeichnet ist. Der Schwenkarm 1 ist im Bereich der Nabe 7 am Außenumfang mit einer Werkzeugaufnahme 23 versehen, die dazu dient, mit Hilfe eines separaten Werkzeugs die Spannvorrichtung 3a in die Betriebsstellung zu bringen. Der Größtdurchmesser "D" der Spannvorrichtung 3a im Bereich des Schwenklagers 8 bzw. der Grundplatte 4 außerhalb der Positioniereinrichtung 12, der auch als Topfdurchmesser zu bezeichnen ist, beträgt ≦ 65mm. Die Topfhöhe "H", die gemäß Figur 1 den Schwenkarm 1 sowie das Maschinenteil 2 im eingebauten Zustand erfasst, beträgt ≦ 80mm.

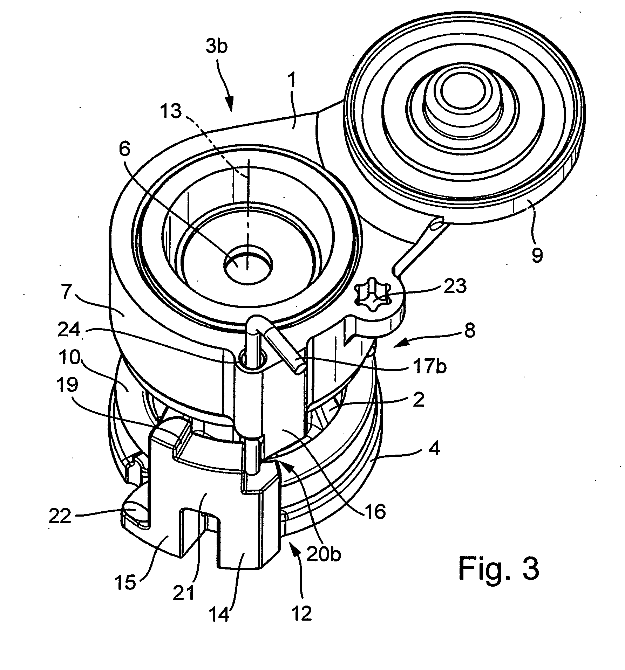

Die Spannvorrichtung 3a gemäß Figur 3 zeigt den ohne eine Spannrolle dargestellten Schwenkarm 1 in der Montageposition 20b. Dazu ist der einstückig mit der Nabe 7 des Maschinenteils 2 verbundene Vorsprung bzw. Zapfen 16 mit einer Bohrung 24 versehen, zur Aufnahme eines separaten Werkzeugs in Form des Stiftes 17b. Zur Erzielung einer Überdeckung mit der Säule 14 der Positioniereinrichtung 12 stützt sich der Stift 17b an der Außenkontur der Säule 14 ab, die dazu gestuft gestaltet ist. Zur Erzielung einer Drehfixierung in beiden Richtungen bietet es sich alternativ an, die Säule 14 wie in Figur 1 gezeigt, stimseitig mit einer Bohrung 18 zu versehen, in die der Stift 17b eingreift. Alle übrigen Details und Einzelheiten der Spannvorrichtung 3b stimmen überein mit der in den Figuren 1 und 2 abgebildeten Spannvorrichtung 3a, so dass zu deren Beschreibung auf die entsprechenden Figurenbeschreibungen verwiesen werden kann.

## Patentansprüche

1. Spannvorrichtung, bestimmt zum Spannen und Dämpfen von Schwingungen eines Zugmittels (11) in einem Zugmitteltrieb, umfassend:
- ein Maschinenteil (2), das mittels einer Grundplatte (4) an einem Gehäuse abgestützt ist;
- eine zentral in dem Maschinenteil (2) angeordnete Befestigung, mit der die Spannvorrichtung (3a, 3b) ortsfest an dem Gehäuse befestigt ist;
- einen gegenüber dem Maschinenteil (2) über eine Nabe (7) drehbaren Schwenkarm (1), an dessen freien Ende eine an dem Zugmittel (11) abgestützte, außerhalb der Nabe (7) drehbare Spannrolle (9) angeordnet ist;
- ein Schwenklager (8) zwischen dem Maschinenteil (2) und dem Schwenkarm (1);
- eine zwischen dem Maschinenteil (2) und dem Schwenkarm (1) eingesetzte, diese Bauteile verspreizende Torsionsfeder (10), die eine kraftschlüssige Abstützung der Spannrolle (9) an dem Zugmittel (11) sicherstellt;
**dadurch gekennzeichnet, dass,**
- eine außenseitig mit der Grundplatte (4) verbundene Positioniereinrichtung (12),
· zwei an der Grundplatte (4) versetzt angeordnete, in Richtung des Schwenkarms (1) ausgerichtete Säulen (14, 15) unterschiedlicher Länge aufweist;
· ein Federende (22) der Torsionsfeder (10) lagefixiert;
· einen Endanschlag (19) für den Schwenkarm (1) bildet;
· mittels eines separaten Werkzeugs den Schwenkarm (1) in einer Montageposition (20a, 20b) lagefixiert.

2. Spannvorrichtung nach Anspruch 1, deren Schwenkarm (1) einen radial nach außen gerichteten Vorsprung bzw. Zapfen (16) aufweist, der mit den Säulen (14, 15) der Positioniereinrichtung (12) mittelbar oder unmittelbar in Wirkverbindung steht.

3. Spannvorrichtung nach Anspruch 2, wobei der Zapfen (16) mit der längeren Säule (15) einen Endanschlag (19) für den Schwenkarm (1) bildet.

4. Spannvorrichtung nach Anspruch 1, deren kürzere Säule (14) der Positioniereinrichtung (12) zur Aufnahme eines Werkzeuges bestimmt ist, an dem nach einer Vormontage der Spannvorrichtung (3a, 3b) der Zapfen (16) des Schwenkarms (1) in der Montageposition (20a, 20b) lagefixiert ist.

5. Spannvorrichtung nach Anspruch 1, wobei nach der Vormontage zur Fixierung des Schwenkarms (1) gegenüber dem Maschinenteil (2) ein an dem Schwenkarm (1) geführtes Werkzeug in oder an der Positioniereinrichtung (12) verrastet.

6. Spannvorrichtung nach Anspruch 1, wobei die Säulen (14, 15) der Positioniereinrichtung (12) an dem von der Grundplatte (4) abgewandten Ende mittels eines Stegs (21) verbunden sind.

7. Spannvorrichtung nach Anspruch 1, wobei das Maschinenteil (2) die Grundplatte (4) und die Positioniereinrichtung (12) einstückig miteinander verbunden sind.

8. Spannvorrichtung nach Anspruch 1, wobei sich die Positioniereinrichtung (12) an einem Außenumfang des Maschinenteils (2) bzw. der Grundplatte (4) über einen Winkel "β" von ≦ 60° erstreckt.

9. Spannvorrichtung nach Anspruch 1, deren Positioniereinrichtung (12) in radialer Richtung an dem Schwenkarm (2) bzw. der Grundplatte (4) ein Radialmaß "V" von ≦ 10mm beansprucht.

10. Spannvorrichtung nach Anspruch 1, wobei nach einer Montage des Maschinenteils (2) mit dem Schwenkarm (1) in dem Bereich des Schwenklagers (8) sich eine Topfhöhe "H" von ≦ 80mm einstellt sowie ein Topfdurchmesser "D" von ≦ 65mm.

11. Spannvorrichtung nach Anspruch 1, wobei der Schwenkarm (1) im Bereich der Nabe (7) eine Werkzeugaufnahme (23) aufweist, die für ein Werkzeug bestimmt ist, mit dem der Schwenkarm (1) einstellbar ist.

## Claims

1. Tensioning device, intended for tensioning and damping vibrations of a traction mechanism (11) in a traction mechanism drive, comprising:
- a machine part (2), which is supported by means of a base plate (4) on a housing;
- a fixing arranged centrally in the machine part (2) and by means of which the tensioning device (3a, 3b) is immovably fixed to the housing;
- a pivot arm (1) which by way of a hub (7) is capable of rotating in relation to the machine part (2) and at the free end of which a tensioning roller (9), supported against the traction mechanism (11), is arranged so that it can rotate outside the hub (7);
- a swivel bearing (8) between the machine part (2) and the pivot arm (1);
- a torsion spring (10), which is inserted between the machine part (2) and the pivot arm (1), serving to brace these components, and which provides non-positive frictional support for the tensioning roller (9) on the traction mechanism (11);
**characterized in that**
a positioning device (12) externally connected to the base plate (4)
■ has two columns (14, 15) of different lengths, arranged offset on the base plate (4) and oriented in the direction of the pivot arm (1);
■ fixes one spring end (22) of the torsion spring (10) in position;
■ forms a limit stop (19) for the pivot arm (1);
■ fixes the pivot arm (1) in an assembly position (20a, 20b) by means of a separate tool.

2. Tensioning device according to Claim 1, **characterized in that** the pivot arm (1) thereof has an outwardly directed projection or spigot (16) which, indirectly or directly, is operatively connected to the columns (14, 15) of the positioning device (12).

3. Tensioning device according to Claim 2, **characterized in that** the spigot (16) together with the longer column (15) forms a limit stop (19) for the pivot arm (1).

4. Tensioning device according to Claim 1, **characterized in that** the shorter column (14) of the positioning device (12) is intended to receive a tool, on which, after pre-assembly of the tensioning device (3a, 3b), the spigot (16) of the pivot arm (1) is fixed in the assembly position (20a, 20b).

5. Tensioning device according to Claim 1, **characterized in that** after pre-assembly in order to fix the pivot arm (1) in relation to the machine part (2) a tool guided on the pivot arm (1) latches in or on the positioning device (12).

6. Tensioning device according to Claim 1, **characterized in that** the columns (14, 15) of the positioning device (12) are connected by means of a web (21) to the end remote from the base plate (4).

7. Tensioning device according to Claim 1, **characterized in that** the machine part (2), the base plate (4) and the positioning device (12) are integrally joined to one another.

8. Tensioning device according to Claim 1, **characterized in that** the positioning device (12) extends over an outer periphery of the machine part (2) and/or the base plate (4) over an angle "β" of ≤ 60°.

9. Tensioning device according to Claim 1, **characterized in that** the positioning device (12) in a radial direction to the pivot arm (2) and/or the base plate (4) occupies a radial dimension "V" of ≤10 mm.

10. Tensioning device according to Claim 1, **characterized in that** after assembly of the machine part (2) with the pivot arm (1), the casing has a height "H" of ≤ 80 mm and a diameter "D" of ≤ 65 mm in the area of the swivel bearing (8).

11. Tensioning device according to Claim 1, **characterized in that** in the area of the hub (7) the pivot arm (1) has a tool-receiving socket (23), which is intended for a tool, which serves for adjustment of the pivot arm (1).

## Revendications

1. Dispositif tendeur conçu pour tendre et amortir les vibrations d'un mécanisme de traction (11) dans un entraînement de traction comprenant :
- une partie machine (2) qui est soutenue sur un boîtier au moyen d'une plaque de base (4) ;
- un dispositif de fixation disposé au centre de la partie machine (2) avec lequel le dispositif tendeur (3a, 3b) est fixé en un endroit fixe sur le boîtier ;
- un bras pivotant (1) pouvant tourner sur un moyeu (7) par rapport à la partie machine (2) à l'extrémité libre duquel est monté un galet tendeur (9) soutenu sur le moyen de traction (11) et pouvant tourner à l'extérieur du moyeu (7) ;
- un palier de pivotement (8) entre la partie machine (2) et le bras pivotant (1) ;
- un ressort de torsion (10) inséré entre la partie machine (2) et le bras pivotant (1) qui écarte ces composants et qui garantit un appui par adhérence du galet tendeur (9) sur le moyen de traction (11) ;
**caractérisé en ce que**
- un dispositif de positionnement (12) relié du côté extérieur avec la plaque de base (4)
* présente deux colonnes (14, 15) de longueurs différentes disposées de manière décalée sur la plaque de base (4) et alignées en direction du bras pivotant (1) ;
* bloque en position fixe une extrémité de ressort (22) du ressort de torsion (10) ;
* forme une butée finale (19) pour le bras pivotant (1) ;
* bloque en position fixe le bras pivotant (1) dans une position de montage (20a, 20b) au moyen d'un outil séparé.

2. Dispositif tendeur selon la revendication 1, dont le bras pivotant (1) présente un élément en saillie ou un tenon (16) dirigé vers l'extérieur dans le sens radial qui est en liaison active indirecte ou directe avec les colonnes (14, 15) du dispositif de positionnement (12).

3. Dispositif tendeur selon la revendication 2, le tenon (16) formant avec la colonne la plus longue (15) une butée finale (19) pour le bras pivotant (1).

4. Dispositif tendeur selon la revendication 1, dont la colonne la plus courte (14) du dispositif de positionnement (12) est conçue pour recevoir un outil auquel le tenon (16) du bras pivotant (1) est bloqué en position fixe en position de montage (20a, 20b) après un prémontage du dispositif tendeur (3a, 3b).

5. Dispositif tendeur selon la revendication 1, un outil guidé sur le bras pivotant (1) s'enclenchant dans ou sur le dispositif de positionnement (12) après le prémontage afin de bloquer le bras pivotant (1) par rapport à la partie machine (2).

6. Dispositif tendeur selon la revendication 1, les colonnes (14, 15) du dispositif de positionnement (12) étant reliées au moyen d'une traverse (21) à l'extrémité opposée à la plaque de base (4).

7. Dispositif tendeur selon la revendication 1, la partie machine (2), la plaque de base (4) et le dispositif de positionnement (12) étant reliés ensemble en une seule pièce.

8. Dispositif tendeur selon la revendication 1, le dispositif de positionnement (12) s'étendant sur un pourtour extérieur de la partie machine (2) ou de la plaque de base (4) sur un angle « ß » ≤ 60°.

9. Dispositif tendeur selon la revendication 1, dont le dispositif de positionnement (12) occupe une cote radiale « V » ≤ 10 mm dans le sens radial au niveau du bras pivotant (2) ou de la plaque de base (4).

10. Dispositif tendeur selon la revendication 1, une hauteur de pot « H » ≤ 80 mm ainsi qu'un diamètre de pot « D » ≤ 65 mm s'établissant dans la zone du palier de pivotement (8) après un montage de la partie machine (2) avec le bras pivotant (1).

11. Dispositif tendeur selon la revendication 1, le bras pivotant (1) présentant dans la zone du moyeu (7) un logement d'outil (23) qui est conçu pour un outil avec lequel le bras pivotant (1) peut être réglé.
